# EUROPÄISCHE PATENTANMELDUNG

(11) **EP 2 829 822 A1**
(43) Veröffentlichungstag der Anmeldung: **28.01.2015**
(21) Anmeldenummer: 14177837.3
(22) Anmeldetag: 21.07.2014
(51) Int. Cl.: F25B 17/02

(54) **Periodisch arbeitende Absorptionsvorrichtung**

(30) Priorität: 23.07.2013 DE 102013107831
(71) Anmelder: Viessmann Werke GmbH & Co. KG, 35108 Allendorf (DE)
(72) Erfinder: Belal, Dawoud Dr., 59955 Winterberg (DE); Andreas, Bornmann, 35099 Burgwald (DE); Höfle, Peter, 64646 Heppenheim (DE); Muhlack, Andreas, 35108 Allendorf (DE)
(74) Vertreter: Wolf, Michael

(57) **Zusammenfassung**

Die Erfindung betrifft eine periodisch arbeitende Absorptionsvorrichtung, umfassend ein Absorbermodul (1) zum Ab- bzw. Desorbieren eines Kältemittels in eine bzw. aus einer flüssigen Lösung bestehend aus einem Absorptionsmittel und dem Kältemittel, einen Kondensator (2) zum Kondensieren des aus der Lösung ausgetriebenen Kältemittels und einen Verdampfer (3) zum Verdampfen des kondensierten Kältemittels, wobei der Verdampfer (3) in einem zur Aufnahme von kondensiertem Kältemittel ausgebildeten Verdampferraum (4) angeordnet ist. Nach der Erfindung ist vorgesehen, dass im Verdampferraum (4) ein zur Detektion einer Füllstandshöhe wahlweise des reinen Kältemittels oder der Lösung ausgebildeter Sensor (5) angeordnet ist.

## Beschreibung

Die Erfindung betrifft eine periodisch arbeitende Absorptionsvorrichtung gemäß dem Oberbegriff des Patentanspruchs 1.

Eine periodisch arbeitende Absorptionsvorrichtung der eingangs genannten Art ist aus der DE 10 2011 105 742 A1 bekannt. Diese besteht aus einem Absorbermodul zum Ab- bzw. Desorbieren eines Kältemittels in eine bzw. aus einer flüssigen, kristallisationsfähigen Lösung bestehend aus einem Absorptionsmittel und dem Kältemittel, einem Kondensator zum Kondensieren des aus der Lösung ausgetriebenen Kältemittels und einem Verdampfer zum Verdampfen des kondensierten Kältemittels, wobei der Verdampfer in einem zur Aufnahme von kondensiertem Kältemittel ausgebildeten Verdampferraum angeordnet ist.

Der Erfindung liegt die Aufgabe zugrunde, die Betriebssicherheit einer solchen periodisch arbeitenden Absorptionsvorrichtung zu verbessern.

Diese Aufgabe ist mit einer periodisch arbeitenden Absorptionsvorrichtung der eingangs genannten Art durch die im Kennzeichen des Patentanspruchs 1 aufgeführten Merkmale gelöst.

Nach der Erfindung ist also vorgesehen, dass im Verdampferraum ein zur Detektion einer Füllstandshöhe wahlweise des reinen Kältemittels oder der Lösung ausgebildeter Sensor angeordnet ist.

Mit anderen Worten zeichnet sich die erfindungsgemäße Lösung dadurch aus, dass mindestens eine Füllstandshöhe im Verdampferraum mittels des Sensors ermittelbar ist.

Die Maßgabe, dass wahlweise die Füllstandshöhe des reinen Kältemittel oder der Lösung ermittelbar sein soll, berücksichtigt dabei, dass es während des Betriebs der Vorrichtung im Verdampferraum zu einer Vermischung des Kältemittels mit dem Absorptionsmittel kommen kann, wobei der Zustand, bei dem sich reines Kältemittel im Verdampferraum befindet, als optimaler Regelzustand zu betrachten ist.

Nach einer ersten bevorzugten Ausführungsform der erfindungsgemäßen Lösung, bei der die Vorrichtung, wie bisher auch schon, einen Lösungskreislauf für eine Lösung aus Absorptions- und Kältemittel aufweist, ist vorgesehen, dass der Sensor zur Detektion derjenigen Füllstandshöhe im Verdampferraum ausgebildet ist, die einer minimal zulässigen Kältemittelkonzentration bzw. einer maximal zulässigen Salzkonzentration im Lösungskreislauf entspricht.

Diese Maßgabe berücksichtigt folgenden Sachverhalt: Da die erfindungsgemäße, periodisch arbeitende Absorptionsvorrichtung gegenüber der Umgebung hinsichtlich ihre Kreisläufe vollständig geschlossen ausgebildet ist, bleibt die Gesamtmasse aus Absorptionsmittel und Kältemittel in der Absorptionsvorrichtung bei ordnungsgemäßem Betrieb zu jedem Zeitpunkt konstant. Eine Änderung der Kältemittelkonzentration im Lösungskreislauf wirkt sich somit direkt auf den Kältekreislauf aus. Zum Beispiel hat eine Reduzierung der Kältemittelkonzentration der Lösung (aus Absorptions- und Kältemittel) eine unmittelbare Erhöhung der Kältemittelmasse im Verdampferraum zur Folge. Während der so genannten Desorptionsphase steigt systembedingt der Füllstand des Kältemittels im Verdampferraum an. Wird dabei ein Füllstand erreicht, der rechnischer einer minimal zulässigen Kältemittelkonzentration im Lösungskreislauf entspricht, so wird dies vom erfindungsgemäßen Sensor detektiert und entsprechend an die Regelung der Absorptionsvorrichtung weitergeleitet, die dann vorzugsweise die Desorptionsphase beendet und die so genannte Absorptionsphase startet. Eine Kristallisation im Lösungskreislauf kann, sofern es sich um eine kristallisationsfähige Lösung handelt, auf diese Weise während des Betriebs der Vorrichtung vermieden werden, da stets eine bestimmte Kältemittelmenge im Absorptionsmittel gelöst bleibt. Außerdem kann aufgrund der zuverlässigen Funktionsweise eines Sensors im Sinne der Erfindung durch diese Maßnahme der einzuhaltende Sicherheitsabstand zur Kristallisationsgrenze der Lösung reduziert werden.

Nach einer zweiten bevorzugten Ausführungsform der erfindungsgemäßen Lösung ist vorgesehen, dass der Sensor zur Detektion einer minimal zulässigen Füllstandshöhe an Kältemittel im Verdampferraum ausgebildet ist. Diese Maßgabe dient zum Beispiel dazu, dass beim Umpumpen von Kältemittel in den Lösungskreislauf (zum Beispiel zur Reinigung des Kältemittelkreislaufs) ein Trockenlaufen der Kältemittelpumpe und damit deren Beschädigung vermieden werden kann.

Andere vorteilhafte Weiterbildungen ergeben sich aus den abhängigen Patentansprüchen.

Die erfindungsgemäße periodisch arbeitende Absorptionsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

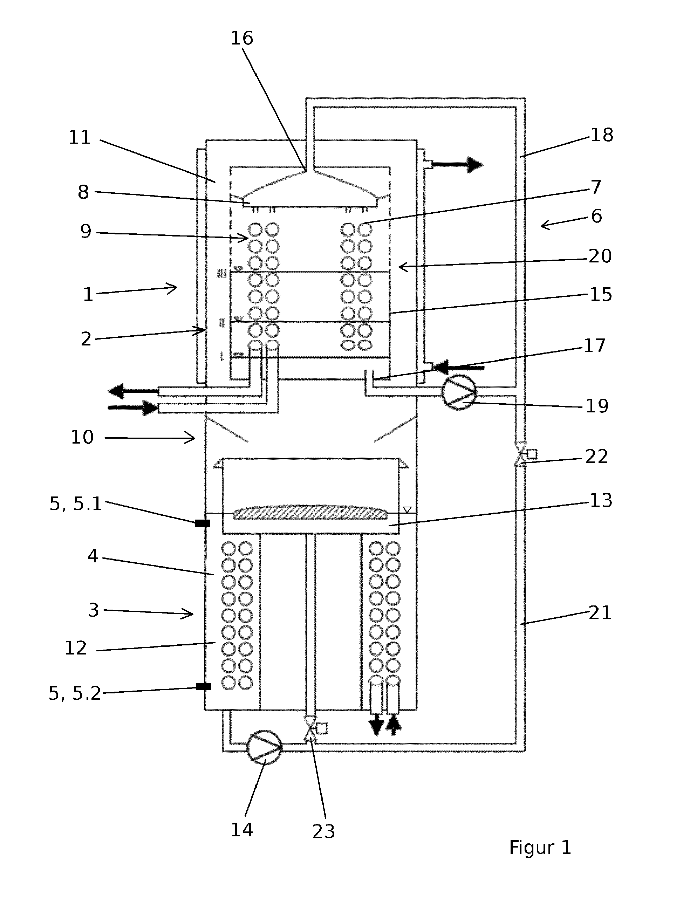

Es zeigt
- Figur 1: schematisch und im Schnitt die erfindungsgemäße periodisch arbeitende Absorptionsvorrichtung mit zwei Sensoren.

Die in Figur 1 dargestellte, periodisch arbeitende Absorptionsvorrichtung weist zunächst in an sich bekannter Weise eine Heizeinrichtung mit einer beheizbaren Oberfläche 7 zum Erhitzen einer flüssigen Lösung aus einem Absorptionsmittel und einem Kältemittel auf. Dabei ist der Oberfläche 7 eine Lösungszuführung 8 zugeordnet.

Die beheizbare Oberfläche 7 entspricht dabei im Ansatz dem flüssigkeitsdurchströmten Wärmetauscher des Sorbers gemäß der DE 10 2008 006 420 B3, allerdings ohne das darauf angeordnete, feste Sorptionsmittel (Zeolith). Dieser Wärmetauscher, der wie Figur 1 andeutet, besonders bevorzugt als Rohr, insbesondere gewendeltes Rohr bzw. gewendeltes Doppelrohr, ausgebildet ist, wobei zwischen nebeneinander verlaufenden Teilen des gewendelten Rohres ein Spalt 9 vorgesehen ist, ist, wie ebenfalls aus der DE 10 2008 006 420 B3 an sich bekannt, im oberen Bereich eines vakummdichten Gehäuses 10 bzw. Modulbehälters angeordnet. Um den Wärmetauscher erhitzen zu können, weist dieser (wie links in Figur 1 zu erkennen) einen Zu- und einen Abfuhranschluss auf, die in ebenfalls an sich bekannter Weise mit einem Wärmetauscher zum Beispiel eines Gasbrenners hydraulisch verbunden sind: Durch Einschalten des Gasbrenners und Zirkulation eines entsprechenden Heizkreismediums kann die Oberfläche 7 des Wärmetauschers beheizt werden.

Alternativ zum genannten Rohrwendelwärmetauscher kann auch ein Lamellenwärmetauscher oder dergleichen vorgesehen sein (nicht extra dargestellt), bei dem das flüssige Absorptionsmittel in analoger Weise die beheizbare Oberfläche benetzt.

Im unteren Teil des Gehäuses 10 ist in ebenfalls bekannter Weise ein Verdampfer 3 angeordnet, und zwar, wie dargestellt, besonders bevorzugt der so genannte Rieselverdampfer gemäß der DE 10 2008 006 420 B3. Mit anderen Worten ist auch bei der erfindungsgemäßen Lösung vorgesehen, dass in einem ersten Volumenbereich 11 ein periodisch ein Kältemittel absorbierender und desorbierender "Absorber" und ein Kondensator 2 angeordnet sind, wobei der vorzugsweise mantelartige Kondensator 2 den oberen Teil des Gehäuses 10 mindestens teilweise umschließend ausgebildet ist. Unterhalb des ersten Volumenbereichs 11 ist weiterhin ein zweiter Volumenbereich 12 vorgesehen, in dem der Verdampfer 3 angeordnet ist, wobei außerdem ein dritter Volumenbereich 13 vorgesehen ist, der zur Aufnahme von Kältemittel über eine mit einer Kältemittelpumpe 14 versehene Verbindungsleitung mit dem zweiten Volumenbereich 12 hydraulisch verbunden ist und der zur Abgabe von Kältemittel an den zweiten Volumenbereich 12 mindestens eine Öffnung aufweist. Ferner weist der dritte Volumenbereich 13 eine zur mindestens teilweise Kältemittelfreistellung des zweiten Volumenbereichs 12 ausreichende Volumengröße auf.

Weiterhin ist vorgesehen, dass die Lösungszuführung 8 als Austrittsöffnung zur Bildung eines die beheizbare Oberfläche 7 benetzenden Lösungsstrahls ausgebildet ist. Dabei ist die Lösungszuführung 8 bevorzugt oberhalb, insbesondere vertikal oberhalb, der beheizbaren Oberfläche 7 angeordnet. Wie aus Figur 1 ersichtlich (angedeutet durch die vier kurzen senkrechten Linien), verlässt die Lösung somit die brausekopfartig ausgebildete Lösungszuführung 8 (oder auch das Berieselungselement) und fällt - der Schwerkraft folgend - auf die Rohrwendeln des Wärmetauschers bzw. die beheizbare Oberfläche 7.

Außerdem ist vorgesehen, dass die Oberfläche 7 bzw. der Wärmetauscher in einem Behälter 15 angeordnet ist, wobei dieser eine Zu- 16 und eine Abführung 17 für das flüssige Absorptionsmittel bzw. je nach Betriebszyklus (auf den weiter unten noch genauer eingegangen wird) für die genannte Lösung aufweist. Dieser Behälter 15 ist, wie Figur 1 zeigt, in einem oberen Teil des Gehäuses 10 angeordnet, d. h. auch dieser Behälter 15 ist mindestens teilweise vom Kondensator 2 umschlossen ausgebildet.

Die Zuführung 16 und die Abführung 17 sind außerhalb des Behälters 15 über eine Lösungsleitung 18 hydraulisch miteinander verbunden, wobei außerdem die Lösungszuführung 8 und die Zuführung 16 zum Behälter 15 durch den besagten "Brausekopf" hydraulisch miteinander verbunden sind. Ferner ist zwischen der Abführung 17 und der Zuführung 16 außerhalb des Behälters 15 und auch außerhalb des Gehäuses 10 zur Förderung der flüssigen Lösung eine Lösungspumpe 19 vorgesehen.

Eine weitere, weiter unten noch genauer erläuterte Maßgabe besteht darin, dass der Behälter 15 ein zur Aufnahme sowohl des gesamten fluiden Absorptionsmittels als auch des gesamten fluiden Kältemittels ausreichend großes, fluiddichtes Hauptvolumen aufweist, wobei weiterhin die vorzugsweise mit der Lösungspumpe 19 fluiddicht absperrbare Abführung 17 unterhalb dieses Hauptvolumens angeordnet ist.

Damit das Kältemittel (typischer Weise Wasser bzw. Wasserdampf) aus dem ersten Volumenbereich 11 in den Behälter 15 und umgekehrt gelagen kann, ist der Behälter 15 oberhalb des Hauptvolumens mit mindestens einer (vorzugsweise einer ganzen Reihe von) Dampfdurchgangsöffnung(en) 20 versehen.

Wie bereits erwähnt, ist weiterhin im unteren Teil des Gehäuses 10 ein zweiter Volumenbereich 12 bzw. der Verdampferraum 4 für das Kältemittel vorgesehen, wobei zwischen dem Verdampferraum 4 und der Zuführung 16 des Behälters 15 eine Verbindungsleitung 21 vorgesehen ist. Diese ist zum Transport des Kältemittels bzw. einer Lösung aus Kältemittel und Absorptionsmittel mit der Kältemittelpumpe 14 versehen. Außerdem ist ein Absperrventil 22 vorgesehen, um den Verdampferraum 4 hydraulisch von der Zuführung 16 abtrennen zu können.

Wie eingangs erläutert, wird die erfindungsgemäße Absorptionsvorrichtung nicht mit einem festen, sondern mit einem flüssigen Absorptionsmittel betrieben. Besonders bevorzugt sind dabei Kältemittel-Absorptionsmittel-Gemische, die insbesondere keine Rektifikation benötigen. Es eignen sich hierfür unter anderem Lithiumnitrat-Ammoniak bzw. Lithiumnitrat-Aminen als Arbeitsstoffpaarungen. Insbesondere eignen sich dafür die so genannten ionischen Flüssigkeiten, also flüssige Salze, die, sofern kein Wasser darin gelöst ist, nur aus Ionen bestehen (siehe zum Beispiel WO 2006/124776 A2 oder WO 2006/134015 A1). Ionische Flüssigkeiten zeichnen sich durch eine Reihe interessanter Eigenschaften aus: Sie sind thermisch stabil, nicht entzündlich, haben einen sehr niedrigen, kaum messbaren Dampfdruck und verfügen über sehr gute Lösungseigenschaften für zahlreiche Substanzen.

Darüber hinaus können aber auch, worauf unten noch genauer eingegangen wird, kristallisationsfähige Lösungen wie zum Beispiel LiBrH₂O (wässriges Lithiumbromid) oder LiClH₂O (wässriges Lithiumchlorid) verwendet werden.

Die erfindungsgemäße Absorptionsvorrichtung funktioniert wie folgt:
Wie auch bei der Lösung nach der DE 10 2008 006 420 B3 wird die erfindungsgemäße Absorptionsvorrichtung periodisch betrieben, und zwar abwechselnd in einer Desorptions- und einer Absorptionsphase.

In der Desorptionsphase wird das Kältemittel aus der flüssigen Lösung ausgetrieben. Dies geschieht dadurch, dass die Lösung mittels der Lösungspumpe 19 durch die Lösungsleitung 18 über die Zuführung 16 zur Lösungszuführung 8 transportiert wird. Von dort fällt die Lösung auf die in der Desorptionsphase beheizte Oberfläche 7 des Rohrwendelwärmetauschers. Auf den Wendeln des Wärmetauschers bildet sich ein dünner Film, dem sehr gut Wärme zugeführt werden kann. Da der Film, wie gesagt, dünn ist, kann das Kältemittel auf diese Weise sehr gut aus der Lösung ausgetrieben werden.

Im Behälter 15 befindet sich eine bestimmte Menge an Absorptionsmittel. Prinzipiell läuft die Desorptionsphase so lange, bis das Kältemittel abhängig von der eingestellten Desorptionstemperatur aus dem Absorptionsmittel ausgetrieben ist. Dabei reduziert sich die Menge an Flüssigkeit im Behälter 15. Der sich am Ende der Desorptionsphase einstellende minimale Pegelstand ist in Figur 1 mit I gekennzeichnet.

Das aus dem Absorptionsmittel ausgetriebene, verdampfte Kältemittel kann durch die Dampfdurchgangsöffnungen 20 (typischer Weise in Form einer gelochten Behälterwandung ausgebildet) in den ersten Volumenbereich 11 gelangen und dort am Kondensator 2 auskondensieren.

Das dann wieder flüssige Kältemittel läuft an der Wand des Gehäuses 10 nach unten und sammelt sich in den Volumenbereichen 12 und 13. Aufgrund der vorgesehenen und in Figur 1 dargestellten Leitbleche gelangt das Kältemittel dabei zunächst in den Volumenbereich 13. Dieser ist aber, genau wie bei der Lösung nach der DE 10 2008 006 420 B3, bodenseitig mit Austrittsöffnungen versehen, so dass sich die Kältemittelniveaus der beiden Volumenbereiche 12 und 13 (bei nicht laufender Kältemittelpumpe 14) automatisch aneinander anpassen.

Die Absorptionsphase beginnt, wie erwähnt, praktisch dann, wenn kein weiteres Kältemittel mehr aus dem Absorptionsmittel ausgetrieben werden kann. Dazu wird einerseits die Beheizung der Oberfläche 7 ausgeschaltet und andererseits die Kältemittelpumpe 14 eingeschaltet. Die Lösungspumpe 19 bleibt weiterhin in Betrieb, so dass nunmehr die kältemittelverarmte Lösung im Behälter 15 umgepumpt wird.

Durch das Einschalten der Kältemittelpumpe 14 wird das im Volumenbereich 12 befindliche Kältemittel bei geöffnetem Absperrventil 23 (und geschlossenem Absperrventil 22) in den Volumenbereich 13 umgepumpt. Aufgrund der bereits erwähnten Austrittsöffnungen rieselt das flüssige Kältemittel auf den freigestellten Verdampfer und kann auf diese Weise (über den Verdampfer eingekoppelte) Umgebungswärme aufnehmen und dabei selbst wieder verdampfen. Dieser Kältemitteldampf steigt im Gehäuse 10 auf, strömt durch die Dampfdurchgangsöffnungen 20 in den Behälter 15 und wird dort von der über die Rohrwendel strömenden Lösung absorbiert. Dabei erwärmt sich die Lösung in bekannter Weise, wobei diese Wärme wiederum auf sehr effektive Weise an die Oberfläche 7 bzw. den Rohrwendelwärmetauscher abgegeben werden kann. Da die Lösung durch den Rieselprozess eine große Oberfläche aufweist, ist außerdem ein optimaler Stofftransport gewährleistet, was wiederum den Wirkungsgrad der Vorrichtung steigert.

Die Absorptionsphase läuft im Prinzip so lange, bis das Absorptionsmittel entsprechend der eingestellten Kühlmitteltemperatur (insbesondere Heizungsrücklauftemperatur) mit Kältemittel gesättigt ist. Durch die Absorption wird die Gesamtflüssigkeitsmenge im Behälter 15 vergrößert; in Figur 1 ist mit II der Füllstand des Behälters am Ende der Absorptionsphase markiert.

Weiterhin ist vorgesehen, dass die Absorptionsvorrichtung neben der Desorptions- und Absorptionsphase auch noch eine Reinigungsphase aufweist. Diese Reinigungsphase dient dazu, eventuell in den ersten, zweiten oder dritten Volumenbereich gelangtes Absorptionsmittel wieder in den Behälter 15 zurück zu fördern.

Um diese Reinigungsphase zu starten, wird das zwischen dem zweiten und dritten Volumenbereich 12, 13 vorgesehene Absperrventil 23 geschlossen, die Kältemittelpumpe 14 eingeschaltet und die im Volumenbereich 12 befindliche Flüssigkeit (Lösung aus Kältemittel und Absorptionsmittel) über die Verbindungsleitung 21, durch das in der Reinigungsphase geöffnete Absperrventil 22, durch die Lösungsleitung 18 zur Lösungszuführung 16 transportiert. Da die Lösungspumpe 19 zu diesem Zeitpunkt noch ausgeschaltet ist, sammelt sich fast (hierauf wird weiter unten noch eingegangen) die Gesamtmenge an Kältemittel und Absorptionsmittel im Behälter 15. Dieser Zustand ist in Figur 1 mit III gekennzeichnet.

Wird nun das Ventil 22 wieder geschlossen, die Lösungspumpe 19 und die Beheizung der Oberfläche 7 eingeschaltet, kann mit einer neuerlichen Desorptionsphase die Lösung aus Kältemittel und Absorptionsmittel aufgetrennt werden.

Eine solche Reinigungsphase kommt insbesondere bei der Neueinstallation der Sorptionsvorrichtung, aber auch immer wieder zwischendurch in Betracht, um den Wirkungsgrad hoch zu halten, denn dieser verschlechtert sich, wenn tatsächlich Absorptionsmittel aus dem Behälter 15 austritt, was je nach Gestaltung der Dampfdurchgangsöffnungen 20 nur mehr oder weniger sicher verhindert werden kann.

Ausgehend von einer solchen Absorptionsvorrichtung, die also aus einem Absorbermodul 1 zum Ab- bzw. Desorbieren eines Kältemittels in eine bzw. aus einer flüssigen Lösung bestehend aus einem Absorptionsmittel und dem Kältemittel, einem Kondensator 2 zum Kondensieren des aus der Lösung ausgetriebenen Kältemittels und einem Verdampfer 3 zum Verdampfen des kondensierten Kältemittels besteht, wobei der Verdampfer 3 in einem zur Aufnahme von kondensiertem Kältemittel ausgebildeten Verdampferraum 4 angeordnet ist, soll nach der Erfindung deren Betriebssicherheit verbessert werden.

Hierfür ist nun wesentlich, dass im Verdampferraum 4 ein zur Detektion einer Füllstandshöhe wahlweise des reinen Kältemittels oder der Lösung ausgebildeter Sensor 5 angeordnet ist. Ein solcher Sensor 5 ist dabei insbesondere als Füllstandsgrenzschalter ausgebildet, wie er zum Beispiel in Wikipedia unter http://de.wikipedia.org/w/ index.php?title=F%C3%BC11-standmessung&oldid=109457633 beschrieben ist.

Dabei ist, wie Figur 1 zeigt, besonders bevorzugt ein erster Sensor 5.1 zur Detektion einer ersten und ein zweiter Sensor 5.2 zur Detektion einer zweiten Füllstandshöhe vorgesehen.

Der erste Sensor 5.1 ist in einem oberen Bereich des Verdampferraumes 4, insbesondere oberhalb des Verdampfers 3, angeordnet. Mit diesem bzw. mit der Festlegung seiner Position zum Verdampfer 3 kann, wie oben beschrieben, überwacht werden, dass am Ende der Desorptionsphase noch genug Kältemittel im Absorptionsmittel verbleibt. Insbesondere bei kristallisationsfähigen Lösungen ist dadurch gewährleistet, dass eine zulässige Konzentration im Lösungskreislauf 6, der im Prinzip aus dem Absorbermodul 1 und der Lösungsleitung 18 besteht und für eine Lösung aus Absorptions- und Kältemittel vorgesehen ist, nicht unterschritten wird. Mit dem ersten Sensor 5.1 kann also sicher gestellt werden, dass der Lösungskreislauf 6 nicht durch auskristallisierendes Absorptionsmittel verstopft wird. Oder nochmals in anderen Worten ausgedrückt: Der Sensor 5 bzw. 5.1 ist zur Detektion einer Füllstandshöhe im Verdampferraum 4 ausgebildet ist, die einer minimal zulässigen Kältemittelkonzentration im Lösungskreislauf 6 entspricht bzw. - verfahrensmäßig formuliert - der Sensor 5 wird zur Detektion einer einer minimal zulässigen Kältemittelkonzentration im Lösungskreislauf 6 entsprechenden Füllstandshöhe im Verdampferraum 4 eingesetzt bzw. verwendet.

Der zweite Sensor 5.2 ist in einem unteren Bereich des Verdampferraumes 4, insbesondere am unteren Ende des Verdampfers 3, angeordnet. Mit diesem kann überwacht werden, dass am Ende der Absorptionsphase eine minimal zulässige Füllstandshöhe im Verdampferraum 4 nicht unterschritten wird. Dies wiederum gewährleistet, dass die Kältemittelpumpe 14 nicht trocken läuft und dadurch entsprechend beschädigt wird.

### Bezugszeichenliste

- 1: Absorbermodul
- 2: Kondensator
- 3: Verdampfer
- 4: Verdampferraum
- 5: Sensor
- 5.1: erster Sensor
- 5.2: zweiter Sensor
- 6: Lösungskreislauf
- 7: Oberfläche
- 8: Lösungszuführung
- 9: Spalt
- 10: Gehäuse
- 11: erster Volumenbereich
- 12: zweiter Volumenbereich
- 13: dritter Volumenbereich
- 14: Kältemittelpumpe
- 15: Behälter
- 16: Zuführung
- 17: Abführung
- 18: Lösungsleitung
- 19: Lösungspumpe
- 20: Dampfdurchgangsöffnung
- 21: Verbindungsleitung
- 22: Absperrventil
- 23: Absperrventil

## Patentansprüche

1. Periodisch arbeitende Absorptionsvorrichtung, umfassend ein Absorbermodul (1) zum Ab- bzw. Desorbieren eines Kältemittels in eine bzw. aus einer flüssigen Lösung bestehend aus einem Absorptionsmittel und dem Kältemittel, einen Kondensator (2) zum Kondensieren des aus der Lösung ausgetriebenen Kältemittels und einen Verdampfer (3) zum Verdampfen des kondensierten Kältemittels, wobei der Verdampfer (3) in einem zur Aufnahme von kondensiertem Kältemittel ausgebildeten Verdampferraum (4) angeordnet ist,
**dadurch gekennzeichnet,**
**dass** im Verdampferraum (4) ein zur Detektion einer Füllstandshöhe wahlweise des reinen Kältemittels oder der Lösung ausgebildeter Sensor (5) angeordnet ist.

2. Periodisch arbeitende Absorptionsvorrichtung nach Anspruch 1,
**dadurch gekennzeichnet,**
**dass** ein erster Sensor (5.1) zur Detektion einer ersten und ein zweiter Sensor (5.2) zur Detektion einer zweiten Füllstandshöhe vorgesehen ist.

3. Periodisch arbeitende Absorptionsvorrichtung nach Anspruch 2,
**dadurch gekennzeichnet,**
**dass** der erste Sensor (5.1) in einem oberen Bereich des Verdampferraumes (4), insbesondere oberhalb des Verdampfers (3), angeordnet ist.

4. Periodisch arbeitende Absorptionsvorrichtung nach Anspruch 2,
**dadurch gekennzeichnet,**
**dass** der zweite Sensor (5.2) in einem unteren Bereich des Verdampferraumes (4), insbesondere am unteren Ende des Verdampfers (3), angeordnet ist.

5. Periodisch arbeitende Absorptionsvorrichtung nach einem der Ansprüche 1 bis 4, wobei ein Lösungskreislauf (6) für eine Lösung aus Absorptions- und Kältemittel vorgesehen ist,
**dadurch gekennzeichnet,**
**dass** der Sensor (5, 5.1) zur Detektion einer einer minimal zulässigen Kältemittelkonzentration im Lösungskreislauf (6) entsprechenden Füllstandshöhe im Verdampferraum (4) ausgebildet ist.

6. Periodisch arbeitende Absorptionsvorrichtung nach einem der Ansprüche 1 bis 4,
**dadurch gekennzeichnet,**
**dass** der Sensor (5, 5.2) zur Detektion einer minimal zulässigen Füllstandshöhe im Verdampferraum (4) ausgebildet ist.
